Europäisches Patentamt

European Patent Office

Office européen des brevets

(11) Veröffentlichungsnummer: **0 377 776**
**A1**

(12) # EUROPÄISCHE PATENTANMELDUNG

(21) Anmeldenummer: **89108997.1**

(51) Int. Cl.5: **G01F 23/68**

(22) Anmeldetag: **19.05.89**

(30) Priorität: **10.01.89 DE 3900440**

(43) Veröffentlichungstag der Anmeldung:
**18.07.90 Patentblatt 90/29**

(84) Benannte Vertragsstaaten:
**DE FR IT**

(71) Anmelder: **VDO Adolf Schindling AG**
**Gräfstrasse 103**
**D-6000 Frankfurt/Main 90(DE)**

(72) Erfinder: **Rau, Karl**
**Thomas-Mann-Strasse 30**
**D-6052 Mühlheim/M.(DE)**
Erfinder: **Stengl, Reinhard**
**Bruchenbrücker Weg 9**
**D-6362 Wöllstadt 1(DE)**
Erfinder: **Pfeifer, Manfred**
**Kastanienweg 11**
**D-6230 Königstein 3(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Niveaugeber.**

(57) Ein Niveaugeber hat in einem Schutzrohr (2) einen Führungsschaft (3), auf dem ein Schwimmer (6) höhenverfahrbar geführt ist. Das Schutzrohr (2) besteht aus zwei teleskopartig ineinanderfahrbaren Rohrstücken (10, 11). Das untere Rohrstück (11) hat eine vorspringende Schneide (12), welche beim Ineinanderfahren das andere Rohrstück (10) der Länge nach auftrennt, so daß es einer Verformung des Niveaugebers nicht im Wege steht.

Fig. 1

EP 0 377 776 A1

# Niveaugeber

Die Erfindung betrifft einen Niveaugeber, insbesondere für Kraftstoffbehälter von Kraftfahrzeugen, welcher in einem Schutzrohr einen eine elektrische Widerstandsbahn bildenden Führungsschaft aufweist, auf dem ein Schwimmer höhenverschieblich angeordnet ist, welcher mit einem Schleifkontakt gegen die Widerstandsbahn anliegt. Solche Niveaugeber sind im Kraftstoffbehälter heutiger Kraftfahrzeuge eingebaut und deshalb allgemein bekannt.

Kraftstoffbehälter sollen im Falle eines Unfalls zerknautschbar sein, dürfen jedoch nicht platzen oder undicht werden, weil auslaufender Kraftstoff zu einer Feuergefahr führt. Das Schutzrohr der bisher bekannten Niveaugeber steift den Kraftstoffbehälter an einer Stelle in Längsrichtung des Schutzrohres in einem relativ hohen Maße aus. Dadurch besteht die Gefahr, daß der Kraftstoffbehälter aufgrund des steifen Schutzrohres aufreißt und undicht wird.

Der Erfindung liegt die Aufgabe zugrunde, einen Niveaugeber der eingangs genannten Art so auszubilden, daß er den Behälter, in welchem er eingebaut ist, insbesondere einen Kraftstoffbehälter, möglichst wenig aussteift und deshalb nicht Ursache für ein Aufreißen des Behälters im Falle eines Unfalls werden kann.

Diese Aufgabe wird erfindungsgemäß dadurch gelöst, daß das Schutzrohr als beim Auftreten von axialen Kräften wegplatzbares Bauteil ausgebildet ist.

Durch diese Gestaltung steift das Schutzrohr den Behälter nicht mehr aus und behindert deshalb nicht ein Zusammenknautschen des Behälters. Dadurch ist die Gefahr eines Undichtwerdens des Behälters infolge eines Unfalls erheblich herabgesetzt. Der Führungsschaft des Niveaugebers hat einen erheblich geringeren Durchmesser als das Schutzrohr und deshalb ein weit geringeres Widerstandsmoment gegen ein seitliches Wegknicken. An diesem Wegknicken wurde er jedoch bei den bisherigen Niveaugebern vom Schutzrohr gehindert, sobald es sich so weit verbogen hatte, daß er gegen die Innenwandung des Schutzrohres anlag. Dank der Erfindung platzt das Schutzrohr beim Unfall völlig weg, so daß der Führungsschaft anschließend frei wegknicken kann.

Besonders einfach ist das Wegplatzen des Schutzrohres zu erreichen, wenn es gemäß einer vorteilhaften Ausgestaltung der Erfindung aus zwei teleskopartig ineinanderfahrbaren Rohrstücken besteht, von denen ein Rohrstück in der Stirnseite seines freien Endes eine Kerbe aufweist, in die das andere Rohrstück mit einer fest auf seiner Mantelfläche vorgesehenen Schneide greift. Werden bei einem Unfall die beiden Rohrstücke ineinandergeschoben, dann bewirkt die Schneide des einen Rohrstückes ein vollständiges Aufreißen des anderen Rohrstückes. Das Material des aufreißenden Kunststoffes muß hierzu natür lich aus einem Kunststoff mit geringer Kerbfestigkeit bestehen. Würde man auf die Schneide verzichten und das Schutzrohr nur teleskopartig ausbilden, dann würde es zwar zunächst ein Zusammenknautschen des Behälters zulassen, nach einem Ineinanderfahren jedoch den teilweise zusammengedrückten Behälter in einem ganz besonders hohen Maße aussteifen und deshalb die Gefahr herbeiführen, die Behälterwandung zu durchdringen.

Ein sehr langer Bereich des Schutzrohres vermag wegzuplatzen, wenn die Kerbe in demjenigen Rohrstück vorgesehen ist, welches von einem oberen Haltestutzen herabführt und die Schneide an einem im Vergleich zu diesem oberen Rohrstück kurzen Rohrstück vorgesehen ist, welches einen unteren Abschluß des Schutzrohres bildet. Da nach dem Wegplatzen des oberen Rohrstückes das untere Rohrstück keine Verbindung mehr mit der Halterung des Niveaugebers hat, ist es im Behälter frei beweglich und steift ihn deshalb nicht aus.

Die Erfindung ist mit ganz besonders geringem Aufwand zu verwirklichen, wenn das kurze Rohrstück in das obere Rohrstück hineingeführt und die Schneide auf der Außenmantelfläche vorgesehen ist.

Auch der Führungsschaft kann beim Unfall in seiner Festigkeit gegen ein Wegknicken vermindert werden, wenn er gemäß einer anderen Weiterbildung der Erfindung aus einem zylindrischen Wicklungsrohr und einem darauf von einer Seite her aufgeschobenen, klammerartigen Kontaktträgerrohr mit einer in seiner Längsrichtung verlaufenden Leiterbahn ausgebildet ist und wenn das Kontaktträgerrohr an seinem unteren Ende eine zu seiner in Längsrichtung offenen Seite hin ansteigende Schrägfläche hat und wenn die untere Stirnfläche des unteren Rohrstückes einen beim Zusammenstauchen des Schutzrohres gegen diese Schrägfläche gelangenden Vorsprung aufweist.

Das Kontaktträgerrohr wird beim Unfall an seinen beiden Enden vom Wicklungsrohr weggeschoben, wenn eine das Schutzrohr und den Führungsschaft tragende Halterung auf der dem Längsschlitz des Kontaktträgerrohres gegenüberliegenden Seite eine mit ihrer Spitze in das Kontaktträgerrohr greifende Keilfläche hat.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in

Fig. 1 eine teilweise geschnitten dargestellte Seitenansicht des Niveaugebers nach der Erfindung,

Fig. 2 eine gegenüber Figur 1 um 90 Grad gedrehte Seitenansicht des Niveaugebers.

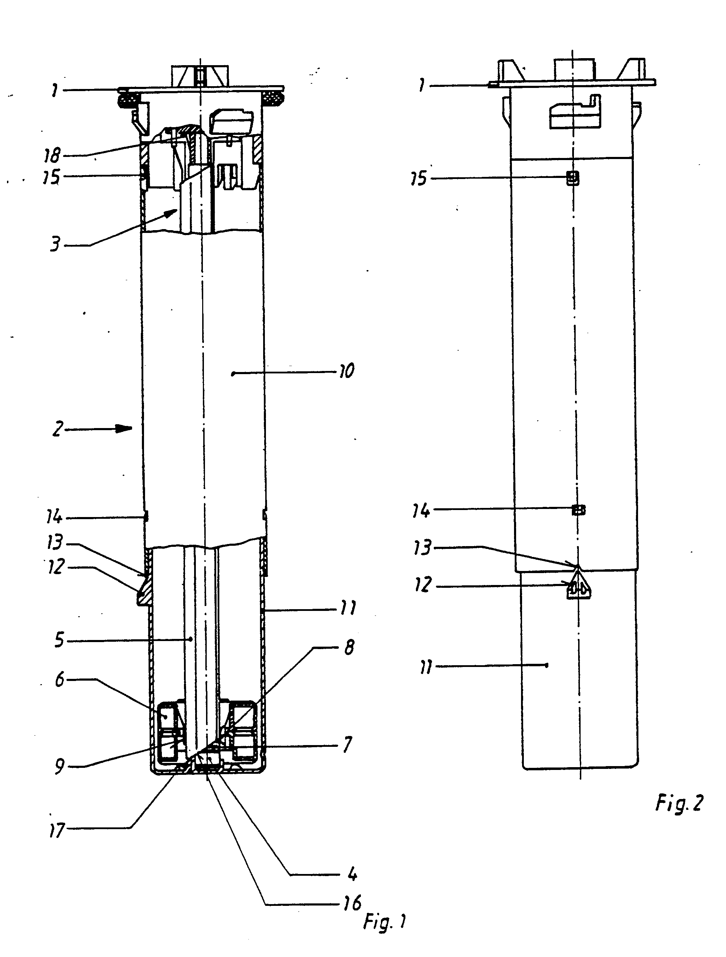

Wie die Figur 1 zeigt, hat der erfindungsgemäße Niveaugeber einen Haltestutzen 1, welcher ein Schutzrohr 2 und einen Führungsschaft 3 haltert. Der Führungsschaft 3 besteht au einem Wicklungsrohr 4 und einem klammerartigen Kontaktträgerrohr 5, welches in Figur 1 gesehen von links auf das Wicklungsrohr 4 aufgeschoben ist. Auf dem Kontaktträgerrohr 5 ist innerhalb des Schutzrohres 2 höhenverschieblich ein Schwimmer 6 angeordnet, der auf übliche Weise eine Wicklung 7 mit einem Schleifer 8 kontaktiert. Der Schwimmer 6 hat einen weiteren Schleifer 9, der gegen eine nicht gezeigte Leiterbahn auf dem Kontaktträgerrohr 5 anliegt. Der Schwimmer 6 schließt deshalb einen Stromkreis von dieser Leiterbahn auf dem Kontaktträgerrohr 5 zur Wicklung 7.

Wichtig für die Erfindung ist, daß das Schutzrohr 2 aus zwei teleskopartig ineinanderfahrbaren Rohrstücken 10, 11 besteht, wobei das untere Rohrstück 11 kürzer als das obere Rohrstück 10 ist und in das obere Rohrstück 10 eingeschoben ist. Wie auch die Figur 2 zeigt, ist auf der Außenmantelfläche des unteren Rohrstückes 11 eine keilförmige Schneide 12 angeformt, welche sich unmittelbar unterhalb einer Kerbe 13 befindet, die in der unteren Stirnfläche des oberen Rohrstückes 10 vorgesehen ist. In der dargestellten Position wird das Rohrstück 11 durch leicht lösbare Rasten 14, 15 im Rohrstück 10 gehalten.

Wie die Figur 1 erkennen läßt, schließt das Kontaktträgerrohr 5 nach unten hin mit einer Schrägfläche 16 ab, der gegenüber ein Vorsprung 17 auf der Bodenfläche des Rohrstückes 11 angeordnet ist. Die Schrägfläche 17 steigt zur offenen Seite des Kontaktträgerrohres 5 hin an. Der Haltestutzen 1 hat eine nach unten sich verjüngende Keilfläche 18, die von oben her in das Kontaktträgerrohr 5 greift.

Aufgrund der beschriebenen Ausbildung des Niveaugebers ergibt sich bei Kraftbeanspruchung in axialer Richtung folgender Funktionsablauf. Als erstes rasten die Rasten 14, 15 aus und ermöglichen es dem Rohrstück 11, sich in das obere Rohrstück 10 hineinzubewegen. Dadurch schiebt sich die Schneide 12 in die Kerbe 13. Gleichzeitig drückt der Vorsprung 17 von unten her gegen die Schrägfläche 16 des Kontakträgerrohres 5. Beides führt dazu, daß das Kontaktträgerrohr 5 an seinem oberen und unteren Ende in der Figur 1 gesehen nach links gedrückt wird und deshalb vom Wicklungsrohr 4 abspringt.

Die sich in die Kerbe 13 drückende Schneide 12 bewirkt, daß das obere Rohrstück 10 der Länge nach aufreißt und dadurch vom Führungsschaft 3 abfallen kann. Das verbleibende Wicklungsrohr 4 ist deshalb in der Lage, unbehindert nach einer Seite wegzuknicken. Es kommt somit zu keiner wesentlichen Aussteifung des Behälters.

## Ansprüche

1. Niveaugeber, insbesondere für Kraftstoffbehälter von Kraftfahrzeugen, welcher in einem Schutzrohr einen eine elektrische Widerstandsbahn bildenden Führungsschaft aufweist, auf dem ein Schwimmer höhenverschieblich angeordnet ist, welcher mit einem Schleifkontakt gegen die Widerstandsbahn anliegt, dadurch gekennzeichnet, daß das Schutzrohr (2) als beim Auftreten von axialen Kräften wegplatzbares Bauteil ausgebildet ist.

2. Niveaugeber nach Anspruch 1, dadurch gekennzeichnet, daß das Schutzrohr (2) aus zwei teleskopartig ineinanderfahrbaren Rohrstücken (10, 11) besteht, von denen ein Rohrstück (10) in der Stirnseite seines freien Endes eine Kerbe (13) aufweist, in die das andere Rohrstück (11) mit einer fest auf seiner Mantelfläche vorgesehenen Schneide (12) greift.

3. Niveaugeber nach den Ansprüchen 1 oder 2, dadurch gekennzeichnet, daß die Kerbe (13) in demjenigen Rohrstück (10) vorgesehen ist, welches von einem oberen Haltestutzen (1) herabführt und die Schneide (12) an einem im Vergleich zu diesem oberen Rohrstück (10) kurzen Rohrstück (11) vorgesehen ist, welches einen unteren Abschluß des Schutzrohres (10) bildet.

4. Niveaugeber nach zumindest einem der vorangehenden Ansprüche, dadurch gekennzeichnet, daß das kurze Rohrstück (11) in das obere Rohrstück (10) hineingeführt und die Schneide (12) auf der Außenmantelfläche vorgesehen ist.

5. Niveaugeber nach zumindest einem der vorangehenden Ansprüche, dadurch gekennzeichnet, daß der Führungsschaft (3) aus einem zylindrischen Wicklungsrohr (4) und einem darauf von einer Seite her aufgeschobenen, klammerartigen Kontaktträgerrohr (5) mit einer in seiner Längsrichtung verlaufenden Leiterbahn ausgebildet ist und daß das Kontaktträgerrohr (5) an seinem unteren Ende eine zu seiner in Längsrichtung offenen Seite hin ansteigende Schrägfläche (16) hat und daß die untere Stirnfläche des unteren Rohrstückes (11) einen beim Zusammenstauchen des Schutzrohres (2) gegen diese Schrägfläche (16) gelangenden Vorsprung (17) aufweist.

6. Niveaugeber nach zumindest einem der vorangehenden Ansprüche, dadurch gekennzeichnet, daß der das Schutzrohr (2) und den Führungsschaft (3) tragende Haltestutzen (1) an der dem Längsschlitz des Kontaktträgerrohres (5) gegenüberliegenden Seite eine mit ihrer Spitze in das Kontaktträgerrohr (5) greifende Keilfläche (18) hat.

EP 0 377 776 A1

Fig. 1

Fig. 2

## EINSCHLÄGIGE DOKUMENTE

EP 89108997.1

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB - A - 2 130 733 <br> (FRATTELLI BORLETTI) <br> * Fig. 1; Zusammenfassung * <br> -- | 1 | G 01 F 23/68 |
| A | US - A - 4 702 107 <br> (GUERRINI et al.) <br> * Fig. 1; Zusammenfassung * <br> ---- | 1 | |

RECHERCHIERTE SACHGEBIETE (Int. Cl.4)

G 01 F 23/00

Der vorliegende Recherchenbericht wurde für alle Patentansprüche erstellt.

| Recherchenort | Abschlußdatum der Recherche | Prüfer |
|---|---|---|
| WIEN | 22-12-1989 | FIALLA |